# NEUE EUROPÄISCHE PATENTSCHRIFT

(11) **EP 0 358 667 B2**
(45) Veröffentlichungstag und Bekanntmachung des Hinweises auf die Entscheidung über den Einspruch: **27.12.1995**
(45) Hinweis auf die Patenterteilung: 27.03.1991
(21) Anmeldenummer: 88903835.2
(22) Anmeldetag: 05.05.1988
(51) Int. Cl.: B65D 71/08, B32B 27/32

(54) **TRANSPARENTE VERPACKUNG FÜR STÜCKIGE GÜTER**
TRANSPARENT WRAPPING FOR BULK GOODS
EMBALLAGE TRANSPARENT POUR PRODUITS EN VRAC

(30) Priorität: 08.05.1987 DE 3715308
(43) Veröffentlichungstag der Anmeldung: 21.03.1990
(73) Patentinhaber: UCB Transpac N.V., 9000 Gent (BE)
(72) Erfinder: Klüter, Wilhelm, 41748 Viersen (DE); Krohn, Harry, 41748 Viersen (DE)
(74) Vertreter: Debled, Thierry
(86) Internationale Anmeldenummer: EP8800379
(87) Internationale Veröffentlichungsnummer: WO8808819

(56) Entgegenhaltungen:
- EP-A- 0 023 776
- DE-A- 2 536 267
- FR-A- 2 281 883
- GB-A- 920 078
- US-A- 4 254 869
- BICOR Communication der Mobil Plastics Europe Inc., vorläufiges Datenblatt BICOR MB 250: Unbeschichtetes, biaxial gerecktes Polypropylen
- BICOR Communication der Mobil Plastics Europe Inc., vorläufiges Datenblatt BICOR MB 400: Koextrudierbares, biaxial gerecktes Polypropylen
- BICOR Communication der Mobil Plastics Europe Inc., vorläufiges Datenblatt BICOR MB 600: Beidseitig Acryl-beschichtetes, biaxial gerecktes Polypropylen
- Verpackungs-Rundschau 3/1984, Seiten 216 u. 218
- Verpackungs-Rundschau 1/1981, Seite 276, Spalten 2 und 3, "Hochleistungseinschlag für Zigarettenschachteln"
- Kunststoff-Tabellen, Dr.-Ing. Bodo Carlowitz, 3. Auflage, 1986, Seiten 371 u. 372
- Kalle Folien für Kondensatoren, Ausgabe 1979, Deckblatt, Inhaltsverzeichnis, Seiten 82-85, 98, 112, 113, 118-125

## Beschreibung

Die Erfindung betrifft eine transparente Verpakkung für stückige Güter, die zunächst einzeln in eine Kunststoffolie verpackt, geschrumpft, im Anschluß daran in eine weitere Kunststoffolie verpackt und geschrumpft wird, wobei für die Einzelverpakkung und die Umverpackung Folien unterschiedlicher Zusammensetzung verwandt werden.

Stückige Güter, insbesondere Schachteln und Kassetten, werden, um ihnen ein gefälligeres Aussehen zu geben und sie gleichzeitig fest zu verschließen, in vielen Fällen in transparenter Folie verpackt, wobei sich nach dem Versiegeln der Folie an den Verpackungsvorgang noch ein kurzer Schrumpfvorgang anschließen kann, da sich dadurch eine eng anliegende Verpackung ergibt, die das verpackte Gut in optisch hervorragender Weise präsentiert. Gleichzeitig ist es vor Staub, Feuchtigkeit und Berührung geschützt.

Handelt es sich bei den zu verpackenden Gütern um solche mit geringen Formaten, so werden im allgemeinen davon Sammelpackungen erstellt, d. h. das bereits einmal verpackte Einzelteil wird zu einer größeren Sammelpackung zusammengefaßt und noch einmal verpackt. Auch hierbei ist man bestrebt, die Verpackung so zu wählen, daß durch beide Verpackungen hindurch der Inhalt betrachtet werden kann, d. h. auch für die Umverpackung wird im allgemeinen transparente Folie gewählt - wobei sowohl die Innenverpackung als auch die Außenverpackung in Teilbereichen mit einem Druck versehen sein kann -. Es ergeben sich aber bei dieser Verpackungsart Probleme. Wird für die Umverpackung die gleiche Folienart gewählt wie für die Einzelpackung, so versiegeln bereits beim Verpackungsvorgang die Siegelbereiche der Großpakkung mit der Kleinpackung, d. h., daß beim Öffnen sowohl die Umverpackung als auch die Einzelverpackung zerstört wird. Derselbe Effekt tritt auf, wenn die Sammelpackung im Anschluß an die Versiegelung durch den Schrumpfofen geleitet wird, um durch das Schrumpfen zu einer eng anliegenden glatten Verpackung zu kommen.

Um die Verbindung der Innenverpackung mit der Umverpackung zu verhindern, ist es bekannt, auf die fertige Einzelverpackung Trennmittel aufzustreichen oder aufzusprühen. Ferner ist aus der DE-AS 22 35 748 bekannt, Dimethylpolysiloxanöl in die Schrumpffolie einzuarbeiten. Beide Möglichkeiten sind dabei insofern nachteilig, als bei der ersten ein zusätzlicher Arbeitsschritt und zusätzliches Material erforderlich ist und bei der zweiten sich zwar die Verbindung der Folien untereinander bei kurzfristigen Temperaturerhöhungen, wie sie beim Schrumpfen auftreten, vermeiden läßt, nicht jedoch das Anhaften der Siegelnähte, so daß nach wie vor in diesem Falle beim Versiegeln der Außenverpakkung ein Verschweißen von Innen- und Außenfolie erfolgt.

Aus dem DE-GM 19 82 961 ist eine Sammelpackung bekannt, deren Einzelpackungen aus einer Verbundfolie mit einer 50 um starken Äthylen-Schicht und einer 20 um starken Polyamid-Schicht bestehen und die Außenpackung aus einer 150 um starken Polyäthylen-Folie gebildet wird. Verpackungen dieser Art weisen weder die erforderliche Transparenz auf noch ist es möglich, sie durch einen Schrumpfvorgang nach dem Verschweißen zu straffen, weil Polyamid mit Polyäthylen keine genügend feste Schweißverbindung ergibt.

Man ist daher häufig den Weg gegangen, als Folie für den Inneneinschlag eine PVC-Folie einzusetzen und die darin eingehüllten Güter zu stapeln, mit einer Polyolefinfolie zu umhüllen und diese dann nicht zu schrumpfen. Dadurch leidet aber sowohl der optische Eindruck als auch die Festigkeit, da die aufeinander gleitenden einzelnen Güter sich innerhalb des Stapels verschieben.

Der vorliegenden Erfindung liegt damit die Aufgabe zugrunde, eine Sammelverpackung zu schaffen, bei der sowohl die Sammelverpackung als auch die darin befindlichen Einzelverpackungen aus transparenter Folie bestehen, die nach der Verpackung geschrumpft ist bei der Versiegelung und beim Schrumpfen keine Verbindung zwischen Sammelpackung und Einzelpackung erfolgt und die Folien als solche das zu verpackende Gut eng anliegend umhüllen und die Kanten der verpackten Gegenstände nicht durch die Einzelpackung hindurchdringen.

Da die Problemstellung und auch die Lösung am klarsten am Verpacken von Tonbandkassetten erläutert werden kann, wird die Erfindung nachstehend an diesem Beispiel abgehandelt, ohne sie jedoch darauf zu beschränken.

Gelöst wird diese Aufgabe durch eine transparente Verpackung für stückige Güter, die zur Erstellung einer Einzelpackung zunächst in eine biaxial gereckte Kunststoffolie eingeschlagen, versiegelt und geschrumpft, im Anschluß daran zu einer Sammelpackung in biaxial gereckte Kunststoffolie gepackt und geschrumpft werden, wobei für die Einzelpackung und die Sammelpackung Folien unterschiedlicher Zusammensetzung verwandt werden, die durch die Kombination folgender Merkmale gekennzeichnet ist: beide Folien weisen einen Wärmeschrumpf zwischen 3 und 15%, gemessen als freier Schrumpf in Luft bei einer Temperatur von 150 _{°} C und einer Schrumpfzeit von 5 Minuten auf. Beide Folien sind Mehrschichtfolien, die aus mindestens 3 Schichten aufgebaut sind. Die Außenschichten der jeweiligen Folie sind aufeinander siegelbar, mindestens eine Außenschicht der ersten Folie ist nicht mit mindestens einer Außenschicht der zweiten Folie siegelbar, die Mittelschicht die Basisschicht der Mehrschichtfolie bildet und aus einem Polypropylenpolymeren besteht.

Durch die Kombination von zwei unterschiedlichen bei der Umverpackung von Einzelpackungen miteinander in Eingriff stehenden Folien erfolgt auch bei der Versiegelung und beim Schrumpfen keine Verbindung zwischen Sammelpackung und Einzelpackung. Desweiteren ist durch den definierten Wärmeschrumpf die auftretende Schrumpfkraft so bemessen, daß die Folien als solche das zu verpackende Gut zwar eng anliegend umhüllen und damit der verpackten Ware ein gefälliges Aussehen geben, auf der anderen Seite aber die Kanten der verpackten Kassetten nicht durch die Einzelpakkung hindurchdringen und diese dadurch zerstören. Wesentlich ist auch der Aufbau der Folien als Mehrschichtfolien, d. h., daß sie mindestens 3 Schichten aufweisen, wobei die Außenschichten jeweils einer Folie aufeinander siegelbar sind. Es ist dadurch möglich, einfachere Verpackunssautomaten einzusetzen und Stegnähte zu vermeiden.

Zweckmäßig sind die Außenschichten der Basisschicht in ihrer chemischen Zusammensetzung identisch und bestehen bevorzugt aus einem Polypropylenco- oder terpolymerisat aus Äthylen und/oder a-Olefinen mit 4 bis 10 C-Atomen.

Als alternative Möglichkeit, die Außenschichten aus unterschiedlichen chemischen Zusammensetzungen zu gestalten, hat sich hervorragend bewährt, daß eine der Außenschichten aus PVDC und die andere aus Acrylharz besteht. Durch die Kombination dieser beiden Folienarten ist einerseits eine gute Versiegelung zwischen PVDC und Acrylharz noch gegeben, andererseits wird eine hervorragende Gasdichtigkeit erreicht, was insbesondere bei der Verpackung von Chemikalien, Aromastoffen, Lebens- und Genußmitteln sowie Parfüm enthaltenden Materialien, wie beispielsweise Seife, von hoher Bedeutung ist, da durch diese Verpakkung das Austreten von Gasen aus der packung sicher verhindert wird. Auf der anderen Seite muß allerdings beachtet werden, daß in solchen Fällen PVDC als Innenschicht eingesetzt werden muß, da es sonst beim Aufbringen der Umverpackung leicht mit dieser verschweißen kann.

Bei erhöhten Anforderungen an Gasdichtigkeit ist es möglich, beide Außenschichten einer Folie aus Polyvinylidenchlorid zu fertigen, das zudem eine gute Versiegelung ermöglicht. Auch hierbei wird als Trägermaterial für das Polyvinylidenchlorid Polypropylen in gereckter Form eingesetzt. Bei der zweiten zweckmäßig für die Einzelpackung einzusetzende Folie wird bevorzugt ein Polypropylenco-oder -terpolymerisat aus Äthylen und/oder a-Olefinen mit 4 bis 10 Kohlenstoffatomen als beidseitige Außenschicht über einer Basisschicht aus Polypropylen eingesetzt.

Durch die Wahl des Polypropylens als Basisschicht ist es möglich, ein glasklares Verpackungsmaterial zu erzeugen, das die Ware als hochglänzende gut bedruckbare und damit werbewirksame Verpackung umschließt. Zweckmäßig ist diese biaxial gereckte und thermofixierte Folie dabei ein Coextrudat, dessen Außenschichten Buten oder Äthylen als Polypropylencopolymermischung enthalten. Eine zweckmäßige Ausgestaltung der Erfindung sicht vor, daß die Basisschicht der Mehrschichtfolie aus einem geschäumten Propylenpolymeren besteht.

Ob diese Mehrschichtfolie für die Herstellung der Einzelpackung oder der Sammelpackung eingesetzt wird, ist als solches bedeutungslos. Wichtig ist, daß sie mit einer weiteren Folie kombiniert wird, deren Außenschichten aus einem Arcylharz bestehen. Das Acrylharz ist dabei zweckmäßig aus einer wäßrigen Acrylatdispersion aufgebracht, wobei die Stärke der Acrylharzschicht zwischen 0,1 und 10 um beträgt. Besonders bevorzugt wird ein Bereich, der zwischen 0,5 und 5 um beträgt, wobei durch die untere Grenze sichergestellt ist, daß eine absolut zuverlässige Haftung der Folien aufeinander erfolgt und die obere Grenze mit Rücksicht auf wirtschaftliche Erwägungen nicht überschritten werden sollte. Selbstverständlich ist die Schichtdicke auch von weiteren Anwendungsfaktoren abhängig, beispielsweise der Gesamtfoliendicke und damit ihrer festigkeit.

### Beispiel 1

In eine Folien-Volleinschlagmaschine mit Stirnseitenpaketeinschlag und längsseitiger Überlappungsnaht - Ilsemann CM1 - wird eine 135 mm breite Rolle einer 25 um starken Kunststoffolie eingelegt. Bei dieser Folie handelt es sich um ein 3-fach-Laminat mit folgendem Aufbau:
2 um a Polypropylencopolymerisat
21 um b Polypropylen gereckt
2 um c Polypropylencopolymerisat.

Eine solche Folie ist von der Firma Mobil unter der Typenbezeichnung MB 400 zu beziehen.

In der Folien-Volleinschlagmaschine wird von der Folien ein Abschnitt mit einer Länge von 181 mm abgewickelt und geschnitten. Im Anschluß daran wird auf diesem Abschnitt eine in einer Kunststoffbox befindliche Kassette quer aufgelegt und mit dem Folienabschnitt überlappend in Querrichtung gesiegelt. In der Faltstation wird dabei ein Paketeinschlag gebildet und stirnseitig versiegelt. Die so verpackte Kassette durchläuft im Anschluß an die Versiegelung einen Schrumpftunnel mit Heißluftumwälzung. Die Temperatur im Tunnel beträgt ca. 180°C, bezogen auf einen Durchsatz von 98 Packungen pro Minute.

### Beispiel 2

Auf der gleichen Volleinschlagmaschine wird eine Kunststoffolie eingesetzt, die bei gleicher Breite folgenden Aufbau zeigt. Auf die zentrale Schicht b, die eine Stärke von 22 um aufweist und, wie im Beispiel 1, aus gerecktem polypropylen besteht, wird beidseitig als Schicht a und c Acrylharz in Form einer wäßrigen Acrylatdispersion aufgetragen und in üblicher Weise ausgehärtet. Die erreichte Schichtdicke beträgt 1,5 um für jede der Seiten a und c. Der Einschlag der Kassette ist identisch mit dem im Beispiel 1 Beschriebenen. Das gleiche gilt für das Schrumpfen.

### Beispiel 3

In eine Folien-Volleinschlagmaschine vom Typ Sollas 17, Hersteller Sollas Holland B. V., wird eine 195 mm breite Rolle einer 32 um starken Kunststoffolie eingelegt. Die Folie ist ein 3-fach Laminat mit einem Kern aus gerecktem polypropylen. Seine Dicke beträgt 29 um. Die außenseitige Beschichtung, also die Schichten a und c, bestehen aus Acrylharz und weisen eine Dicke von je 1,5 um auf. Von dieser Rolle wird ein Abschnitt mit einer Länge von 500 mm abgelängt, auf diesen Abschnitt wird ein Stapel vorverpackter Kassetten aufgesetzt, wobei 10 Kassetten nebeneinander hochkant stehend auf diesem Abschnitt angeordnet werden. Die Einzelverpackung der Kassetten besteht dabei aus einem Laminat gemäß Beispiel 1. Einschlag, Längs- und Stirnversiegelung sowie die Schrumpfuns erfolgt gemäß Beispiel 1.

### Beispiel 4

Gemäß Beispiel 3 wird eine Rolle von 195 mm Breite eingelegt. Es handelt sich diesmal um eine 30 um dicke Kunststoffolie mit folgendem Aufbau. Mittelschicht b 26 um starkes Polypropylen gereckt Außenbeschichtung a und c je 2 um polypropylencopolymerisat. Abweichend von dem im Beispiel 3 eingebrachten Stapel von Einzelverpackungen, die in ein Laminat gemäß Beispiel 1 eingeschlagen sind, wird jetzt ein Laminat gemäß Beispiel 2 verwandt, so daß auch hierbei der Unterschied zwischen Folienverpackung der Einzelverpackung und Folienverpackung des Gebindes gewahrt ist. Wie im Beispiel 3 bereits ausgeführt, wird auch hier die Sammelverpackung durch einen Schrumpftunnel geführt. Die Temperatur liegt dabei bei ca. 180_{°}C, die Taktzeit beträgt ca. 42 Packungen pro Minute. Durch den Schrumpfvorgang wird ein enges Anliegen der Außenverpackung an der Einzelpackung erreicht.

### Beispiel 5

In eine Folien-Volleinschlagmaschine vom Typ Ilsemann CN 2 wird eine 195 mm breite Rolle einer 25 um starken Mehrschichtfolie eingelegt. Die Folie ist ein Dreifachlaminat mit einem Kern aus gerecktem Polypropylen, der eine Dicke von 22 um aufweist. Die außenseitigen Beschichtungen bestehen aus PVDC und weisen eine Dicke von je 1,5 um auf. Die Folie als solche ist von der Firma ICI unter der Bezeichnung propafilm, Type CF, zu beziehen. Von dieser Rolle wird ein Abschnitt mit einer Länge von 500 mm abgelängt, auf diesen Abschnitt wird ein Stapel vorverpackter Kassetten aufgesetzt, wobei 10 Kassetten nebeneinander hochkant stehend auf diesem Abschnitt angeordnet werden. Einschlag, Längs- und Stirnversiegelung sowie die Schrumpfung erfolgen analog Beispiel 1.
Fig. 1 zeigt die Abrollung einer Folienrolle von noch nicht getrennten Abschnitten
Fig. 2 als Ausschnitt aus dieser Verpackungsvorrichtung fertig umhüllte Kassetten
Fig. 3 ein Stück abgerollte Verpackungsfolie für den Außeneinschlag von zehn verpackten Kassetten
Fig. 4 die fertig verpackten Kassetten als Zehnerpack
Fig. 5 einen stark vergrößerten Schnitt durch die Folie für die Einzelpackung
Fig. 6 den stark vergrößerten Schnitt durch die Folie für die Zehnerpackung
Fig. 7 zeigt einen Schnitt durch eine Mehrschichtfolie mit aufgeschäumter Kernschicht
Fig. 8 zeigt einen vergrößerten Detailschnitt in der Ebene VIII-VIII der Fig. 4
Fig. 9 zeigt einen vergrößerten Detailschnitt in der Ebene IX-IX der Fig. 4.

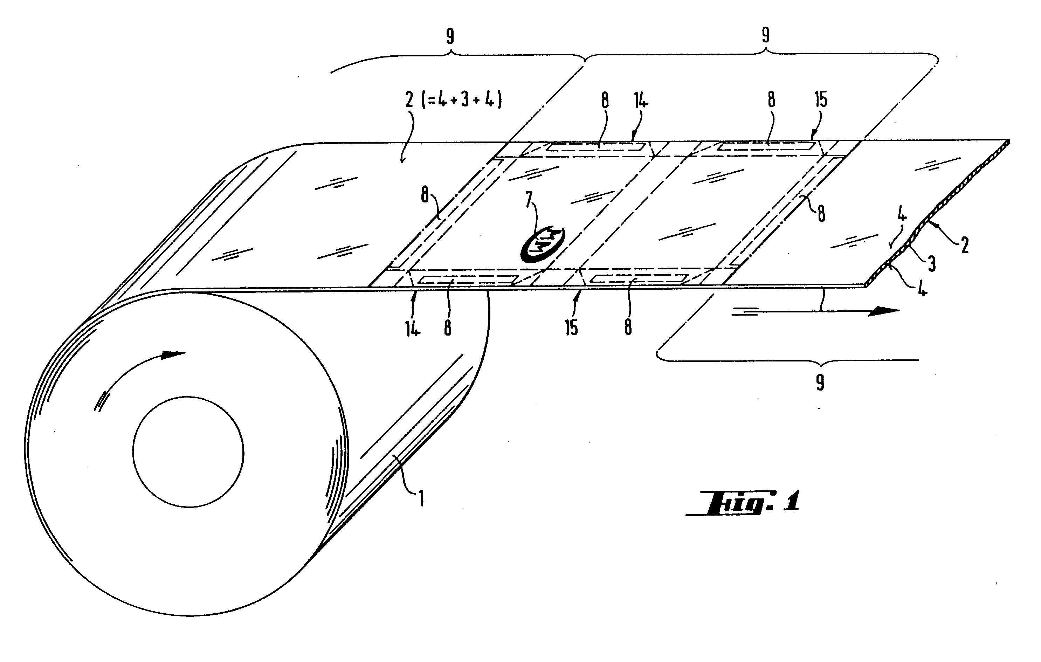

Von der Rolle (1) wird eine Mehrschichtfolie (2) abgezogen, deren Kernschicht (3) aus einem Polypropylenpolymeren besteht. Diese Kernschicht (3) ist beidseitig mit Außenschichten (4) versehen, die aus einer Polypropylencopolymermischung von isotaktischem Polypropylen und isotaktischem Polybuten besteht. Die Folie ist mit einem Konterdruck (7) versehen, der nicht in die Siegelbereiche (8) hineinreicht. Auf einer üblichen nicht näher dargestellten Verpackungsmaschine wird die Mehrschichtfolie (2) in einzelne Abschnitte (9) unterteilt, auf die quer zur Laufrichtung der Mehrschichtfolie Kassetten (10) maschinell aufgelest werden. Der Abschnitt (9) wird dann zunächst quer um die Kassette (10) gefaltet und an der Längsseite (14) der Kassette (10) im Siegelbereich (8) gesiegelt, sodann erfolgt an den Stirnseiten (12) der Kassette (10) durch Einfalten die Bildung eines Paketverschlußes (13), wobei ebenfalls im Siegelbereich (8) ein Verschweißen der Oberlasche (14) mit der Unterlasche (15) erfolgt. Die so fertiggestellte Einzelpackung (16) passiert einen nicht dargestellten Schrumpfofen, nach dessen Verlassen die Mehrschichtfolie (2) eng an der Kassette (10) anliegt.

Von diesen Einzelpackungen (16) werden in einer weiteren nicht dargestellten Verpackungsmaschine zehn Stück zu einem Stapel zusammengefaßt und auf eine ebenfalls mit einem Konterdruck (7) bzw. (7') versehene Außenfolie (17), die zu Zuschnitten (18) abgelängt wurde, aufgebracht. Die Außenfolie (17) besteht aus einer Kernschicht (3) aus einem Propylenpolymeren, auf die als Außenschichten (5) ein Acrylharz aufgetragen wurde. Durch das Umhüllen des Stapels aus zehn Einzelpackungen (16) mit dem Zuschnitt (18) wird eine Sammelpackung (20) gebildet, wobei die Bildung des Paketeinschlages (13', 14', 15') und die Versiegelung (8') analog der Herstellung der Einzelpakkung (16) erfolgt. Die so erstellte Sammelpackung (20) passiert einen nicht dargestellten Schrumpfofen, wodurch die Außenfolie (17) eng um den Stapel (6) aus Einzelpackungen (16) geschrumpft wird. Weder durch den Schrumpfvorgang noch durch das Siegeln verbindet sich die Außenfolie (17) mit der Mehrschichtfolie (2) der Einzelpackung (16), so daß beim Öffnen der Sammelpackung (20) der Einschlag der Einzelpackung (16) nicht beschädigt wird.

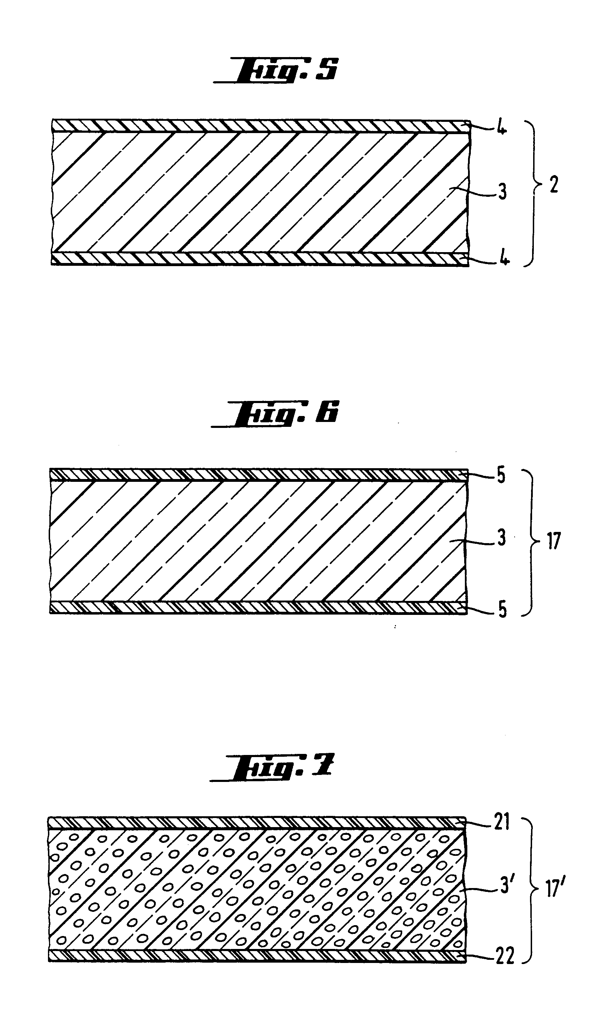

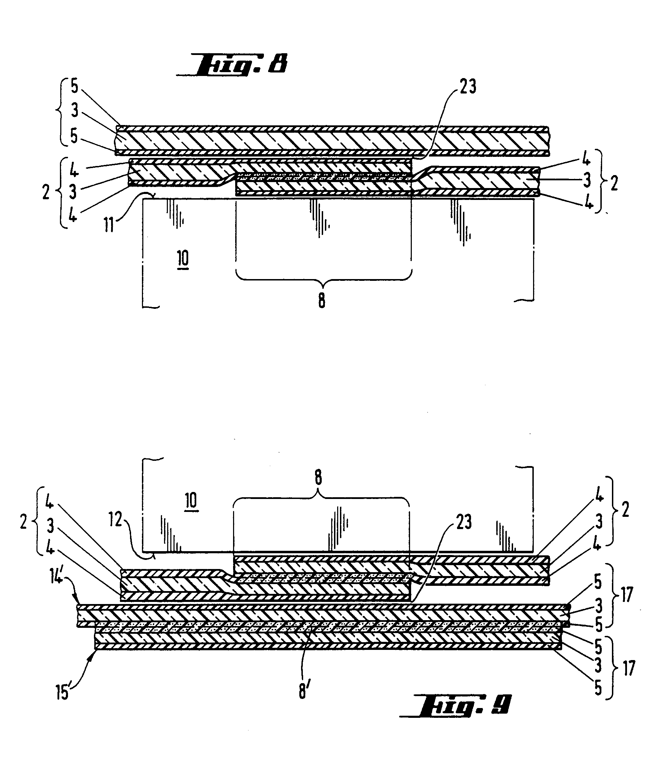

In Fig. 7 ist der Querschnitt einer weiteren Außenfolie (17') dargestellt, deren Kernschicht (3') aus einem aufgeschäumten polypropylenpolymeren besteht. Die Außenschicht (21) wird dabei durch eine PVDC-, die Außenschicht (22) durch eine Acrylharz-Beschichtung gebildet.

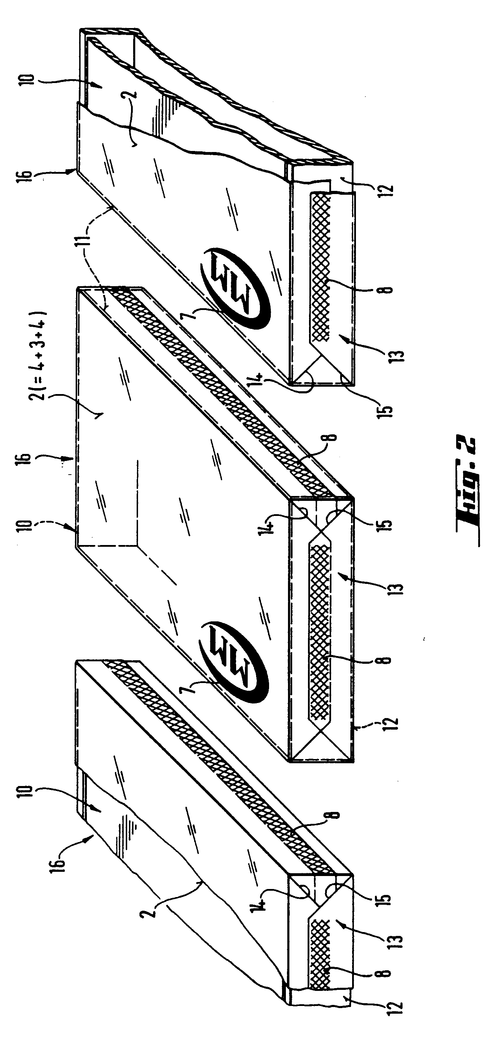

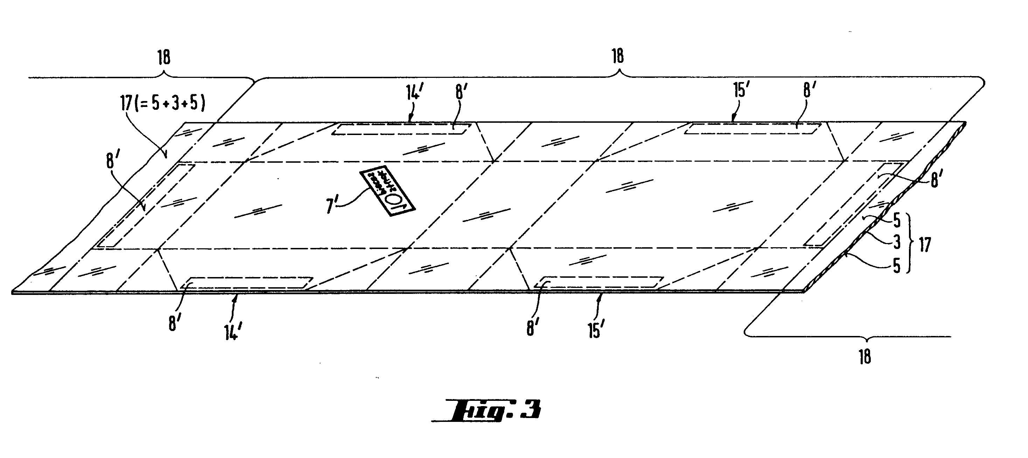

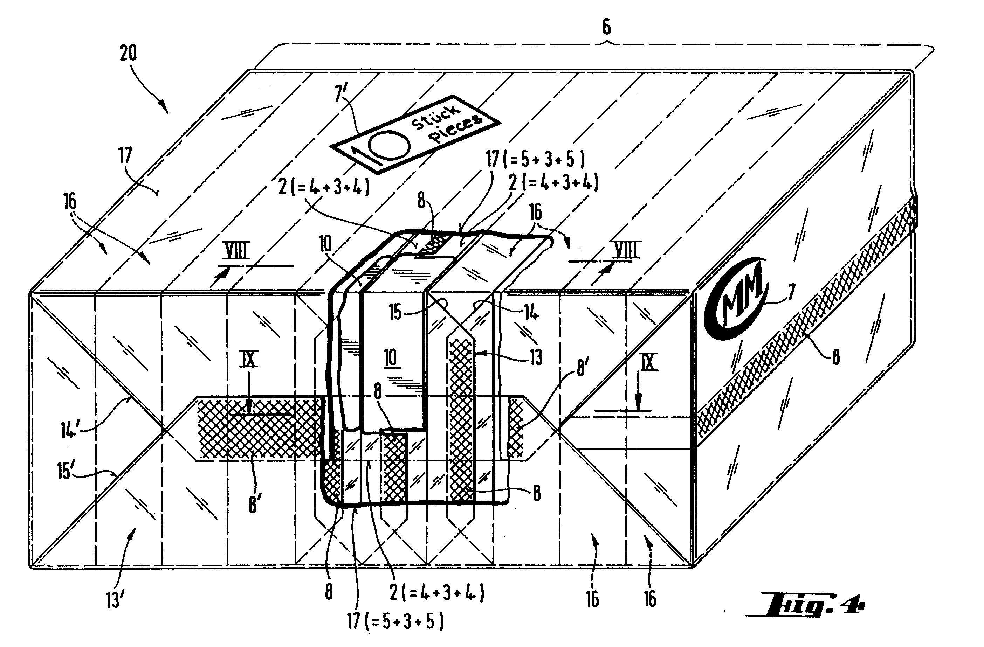

Die Fig. 8 zeigt einen Teilschnitt entlang der Linie VIII-VIII in Fig. 4 durch die Sammelpackung (20). Die Außenfolie (17) wird von der Kernschicht (3) gebildet, die Außenschichten (5) aus Acrylharz aufweist. Die Mehrschichtfolie (2) weist ebenfalls eine Kernschicht (3) aus einem Propylenpolymeren auf. Diese Kernschicht (3) ist aber mit Außenschichten (4) versehen, die aus einer Polypropylencopolymermischung von isotaktischem Polypropylen und isotaktischem Polybuten besteht. Wie aus Fig. 8 ersichtlich, befindet sich zwischen den Außenschichten (4) und (5) auch nach dem Schrumpfprozeß ein Luftspalt (23), der in der Zeichnung stark vergrößert dargestellt ist, weil die Außenschichten (4) und (5) nicht aufeinander siegeln.

Fig. 9 zeigt einen Teilschnitt durch die Sammelpackung (20) entlang der Linie IX-IX in Fig. 4. In diesem Fall ist also der Siegelbereich (8') der Sammelpackung (20) geschnitten dargestellt. Trotz der Versiegelung der Außenfolie (17) in der Siegelzone (8') ist der Luftspalt (23) zwischen den Außenschichten (4) und (5) vorhanden, wohingegen die jeweils identischen Schichten (4) im Siegelbereich (8) der Mehrschichtfolie (2) und analog die Außenschichten (5) in der Siegelzone (8') der Außenfolie (17) miteinander verschweißt sind.

## Patentansprüche

1. Transparente Verpackung für stückige Güter, die zur Erstellung einer Einzelpackung zunächst in eine biaxial gereckte Kunststoffolie eingeschlagen, versiegelt und geschrumpft, im Anschluß daran zu einer Sammelpackung in biaxial gereckte Kunststoffolie gepackt und geschrumpft werden, wobei für die Einzelpakkung und die Sammelpackung Folien unterschiedlicher Zusammensetzung verwandt werden, gekennzeichnet durch die Kombination folgender Merkmale: beide Folien sind thermofixiert und weisen einen Wärmeschrumpf zwischen 3% und 15%, gemessen als freier Schrumpf in Luft bei einer Temperatur von 150 _{°} C und einer Schrumpfzeit von 5 Minuten auf, beide Folien sind Mehrschichtfolien, die aus mindestens drei Schichten aufgebaut sind, die Außenschichten der jeweiligen Folie sind aufeinander siegelbar, mindestens eine Außenschicht der ersten Folie ist nicht mit mindestens einer Außenschicht der zweiten Folie siegelbar, die Mittelschicht bildet die Basisschicht der Mehrschichtfolie und besteht aus einem polypropylenpolymeren.

2. Transparente Verpackung nach Anspruch 1, dadurch gekennzeichnet, daß die Außenschichten der jeweiligen Folien in ihrer chemischen Zusammensetzung identisch sind.

3. Transparente Verpackung nach einem der Ansprüche 1 oder 2, dadurch gekennzeichnet, daß die Basisschicht der Mehrschichtfolie aus einem geschäumten Propylenpolymeren besteht.

4. Transparente Verpackung nach einem der Ansprüche 1 bis 3, dadurch gekennzeichnet, daß die Außenschicht einer Folie ein Polypropylenco- oder Terpolymerisat aus Äthylen und/oder a-Olefinen mit 4 bis 10 C-Atomen ist.

5. Transparente Verpackung nach einem der Ansprüche 1 bis 4, dadurch gekennzeichnet, daß die Mehrschichtfolie coextrudiert, biaxial gereckt und thermofixiert ist.

6. Transparente Verpackung nach Anspruch 4, dadurch gekennzeichnet, daß die Außenschicht aus einer Polypropylencopolymermischung von isotaktischem polypropylen und isotaktischem Polybuten besteht.

7. Transparente Verpackung nach Anspruch 4, dadurch gekennzeichnet, daß die Außenschicht ein polypropylenäthylencopolymerisat ist.

8. Transparente Verpackung nach Anspruch 7, dadurch gekennzeichnet, daß die Außenschicht als Co-Monomeres 1 bis 6 Gew.% Ätylen enthält.

9. Transparente Verpackung nach Anspruch 4, dadurch gekennzeichnet, daß die Außenschicht ein Polypropylencopolymer mit einem Gehalt von 10 bis 15% Buten (1) ist.

10. Transparente Verpackung nach Anspruch 4, dadurch gekennzeichnet, daß die Außenschicht aus einem Terpolymeren aus Propylen, Äthylen und einem C4 bis C10 a-Olefin besteht.

11. Transparente Verpackung nach einem der Ansprüche 1 bis 3, dadurch gekennzeichnet, daß die Außenschichten der zweiten Folie aus einem Acrylharz bestehen.

12. Transparente Verpackung nach Anspruch 11, dadurch gekennzeichnet, daß das Acrylharz in Form einer wäßrigen Acrylat-Dispersion aufgetragen ist.

13. Transparente Verpackung nach einem der Ansprüche 11 und 12, dadurch gekennzeichnet, daß die Stärke der Acrylharzschicht 0,1 bis 10 um beträgt.

14. Transparente Verpackung nach Anspruch 1, dadurch gekennzeichnet, daß eine der Außenschichten aus PVDC und die andere aus Acrylharz besteht.

15. Transparente Verpackung nach Anspruch 1, dadurch gekennzeichnet, daß beide Außenschichten einer Folie aus PVDC und die Außenschichten der anderen Folie aus einem Polypropylenco- oder -terpolymerisat aus Äthylen und/oder a-Olefinen mit 4 bis 10 C-Atomen bestehen.

## Claims

1. Transparent wrapping for bulk goods, which in order to produce an individual package are first wrapped in a biaxially stretched plastic film, sealed and shrunk, and then packed in biaxially stretched plastic film, to form a composite package, and shrunk, films of different composition being used for the individual package and for the composite package, characterised by the combination of the following features: both films are heat-set and have a heat shrinkage of between 3% and 15% measured as free shrinkage in air at a temperature of 150 _{°} C and a shrinkage time of 5 minutes, both films are multilayer films, composed of at least three layers, the outer layers of the respective film can be sealed onto one another, at least one outer layer of the first film cannot be sealed onto at least one outer layer of the second film, the middle layer forms the base layer of the multi-layer film and comprises a propylene polymer.

2. Transparent wrapping according to claim 1, characterised in that the outer layers of the respective films are identical in their chemical composition.

3. Transparent wrapping according to one of claims 1 or 2, characterised in that the base layer of the multi-layer film comprises a foamed propylene polymer.

4. Transparent wrapping according to one of claims 1 to 3, characterised in that the outer layer of one film is a polypropylene co- or terpolymer of ethylene and/or a-olefins with from 4 to 10 carbon atoms.

5. Transparent wrapping according to one of claims 1 to 4, characterised in that the multi- layer film is co-extruded, biaxially stretched, and heat-set.

6. Transparent wrapping according to claim 4, characterised in that the outer layer comprises a polypropylene copolymer mixture of isotactic polypropylene and isotactic polybutene.

7. Transparent wrapping according to claim 4, characterised in that the outer layer is a polypropylene/-ethylene copolymer.

8. Transparent wrapping according to claim 7, characterised in that the outer layer contains from 1 to 6% by weight of ethylene as comonomer.

9. Transparent wrapping according to claim 4, characterised in that the outer layer is a polypropylene copolymer with a content of from 10 to 15% of butene (1).

10. Transparent wrapping according to claim 4, characterised in that the outer layer comprises a terpolymer of propylene, ethylene and a C₄ to C₁₀ a-olefin.

11. Transparent wrapping according to one of claims 1 to 3, characterised in that the outer layers of the second film comprise an acrylic resin.

12. Transparent wrapping according to claim 11, characterised in that the acrylic resin is applied in the form of an aqueous acrylate dispersion.

13. Transparent wrapping according to one of claims 11 and 12, characterised in that the thickness of the acrylic resin layer is from 0.1 to 10 /1.m.

14. Transparent wrapping according to claim 1, characterised in that the one of the outer layers comprises PVDC and the other comprises acrylic resin.

15. Transparent wrapping according to claim 1, characterised in that both outer layers of one film comprise PVDC and the outer layers of the other film comprise a polypropylene co- or terpolymer of ethylene and/or a-olefins with from 4 to 10 carbon atoms.

## Revendications

1. Emballage transparent pour des produits par éléments qui sont d'abord emballés dans un film plastique étiré bi-orienté, soudé et rétracté pour former un emballage individuel, puis sont emballés dans un film plastique étiré bi-orienté et rétracté pour former un emballage groupé, des films de compositions différentes étant utilisés pour l'emballage individuel et pour l'emballage groupé, caractérisé par la combinaison des caractéristiques suivantes: les deux films sont thermofixés et ont un coefficient de rétraction compris entre 3 % et 15 %, mesuré comme rétraction libre à l'air avec une température de 150_{°}C et un temps de rétraction de 5 minutes, les deux films sont des films multi- couches, qui comportent au moins trois couches, les couches externes de chacun des films sont soudables entre elles, au moins une couche externe du premier film n'est pas soudable avec au moins une couche externe du deuxième film, la couche intermédiaire constitue la couche de base du film multicouche et est composée d'un polymère de propylène.

2. Emballage transparent selon la revendication 1, caractérisé en ce que les couches externes de chacun des films sont identiques dans leur composition chimique.

3. Emballage transparent selon l'une des revendications 1 ou 2, caractérisé en ce que la couche de base du film multicouche est composée d'un polymère de propylène moussé.

4. Emballage transparent selon l'une des revendications 1 à 3, caractérisé en ce que la couche externe d'un film est un copolymère ou terpolymère de polypropylène et d'éthylène et/ou d'a-oléfines ayant 4 à 10 atomes de carbone.

5. Emballage transparent selon l'une des revendications 1 à 4, caractérisé en ce que le film multicouche est coextrudé étiré bi-orienté et thermofixé.

6. Emballage transparent selon la revendication 4, caractérisé en ce que la couche externe est composée d'un mélange copolymère de polypropylène, de polypropylène isotactique et de polybutène isotactique.

7. Emballage transparent selon la revendication 4, caractérisé en ce que la couche externe est un copolymère de polypropylène et d'éthylène.

8. Emballage transparent selon la revendication 7, caractérisé en ce que la couche externe contient comme comonomère 1 à 6% en poids d'éthylène.

9. Emballage transparent selon la revendication 4, caractérisé en ce que la couche externe est un copolymère de polypropylène avec une teneur de 10 à 15% de butène (1).

10. Emballage transparent selon la revendication 4, caractérisé en ce que la couche externe est composée d'un terpolymère de propylène, d'éthylène et d' a-oléfine ayant 4 à 10 atomes de carbone.

11. Emballage transparent selon l'une des revendications 1 à 3, caractérisé en ce que les couches externes du deuxième film sont composées d'une résine acrylique.

12. Emballage transparent selon la revendication 11, caractérisé en ce que la résine acrylique est appliquée sous forme d'une dispersion d'acrylate dans de l'eau.

13. Emballage transparent selon l'une des revendications 11 et 12, caractérisé en ce que la couche de résine acrylique a une épaisseur comprise entre 0,1 et 10 µm.

14. Emballage transparent selon la revendication 1, caractérisé en ce que l'une des couches externe est composée de PVDC et l'autre couche externe est composée de résine acrylique.

15. Emballage transparent selon la revendication 1, caractérisé en ce que les deux couches externes d'un film sont composées de PVDC et les couches externes de l'autre film sont composées d'un copolymère ou terpolymère de polypropylène et d'éthylène et/ou d'a-oléfines ayant 4 à 10 atomes de carbone.
